# FASCICULE DE BREVET EUROPEEN

(11) **EP 0 993 777 B1**
(45) Date de publication et mention de la délivrance du brevet: **13.02.2008**
(21) Numéro de dépôt: 98403050.2
(22) Date de dépôt: 04.12.1998
(51) Int. Cl.: A21D 13/08, A21D 2/36, A21D 2/26, A23L 1/32

(54) **Composition et procédé pour remplacer une partie des oeufs entiers par du blanc d'oeuf en poudre ou équivalent dans un article de pâtisserie**
Zusammensetzung und Verfahren zum Ersatz von Eiern mit Eiweiss oder dergleichen für Backwaren
Composition and process to replace a part of whole eggs with eggwhite powder or substitute in a pastry

(30) Priorité: 14.10.1998 FR 9812872
(43) Date de publication de la demande: 19.04.2000
(73) Titulaire: Foco, 75007 Paris (FR)
(72) Inventeur: Cavroy, Patrick, 75007 Paris (FR)
(74) Mandataire: Santarelli

(56) Documents cités:
- DE-A- 19 509 660
- FR-A- 2 589 680
- GB-A- 2 120 522
- US-A- 3 864 500
- US-A- 4 120 986
- US-A- 4 421 777
- US-A- 4 526 799
- US-A- 4 752 484

## Description

La présente invention a pour objet un procédé de préparation d'articles de pâtisserie-viennoiserie et similaires permettant d'économiser la quantité d'oeufs employée et/ou en améliorer l'aspect de ces articles, ainsi que des préparations conçues à cet effet.

Dès que la pâtisserie-viennoiserie a commencé à s'industrialiser, les sociétés impliquées dans ce secteur d'activité ont cherché à faire des économies. Les économies les plus intéressantes semblaient devoir être faites sur la quantité d'oeufs employés.

Il existe depuis longtemps des substituts du blanc d'oeuf, donc pour remplacer le blanc d'oeuf; mais ces produits sont chers et peu intéressants et ne procurent qu'une petite réduction de prix. Il existe aussi des substituts d'oeufs entiers, donc destinés à remplacer les oeufs entiers. Il existe enfin des substituts du jaune d'oeuf.

Les oeufs entiers utilisés dans la préparation des produits de pâtisserie-viennoiserie jouent plusieurs fonctions. En effet, l'oeuf monte au battage et à la cuisson au four. La montée au battage est attribuée à la viscosité de l'oeuf, tandis que la montée au four est attribuée à la coagulation des protéines de l'oeuf.

C'est pourquoi, pour remplir la première fonction, des biscuitiers ont immédiatement pensé à l'utilisation d'épaississants et ont donc ajouté à leur préparation de base des gommes végétales, tandis que pour obtenir une bonne coagulation, ils ont pensé à ajouter des protéines.

Ainsi, dans les années soixante, on a commercialisé des préparations destinées à économiser les oeufs qui étaient à base de protéines (essentiellement du lait écrémé) et de gommes végétales (essentiellement gomme de guar ou de caroube et alginates).

A l'heure actuelle, on n'utilise plus que des protéines comme les protéines de soja ou le riz désamidonné, ainsi que les gommes comme les gommes xanthane, de guar et de caroube.

Mais ces composés ne permettent pas d'économiser plus de 7 % de la quantité d'oeufs mise en oeuvre sans dégradation de la qualité du produit.

US-A-3 864 500 décrit un substitut d'oeuf entier, utilisé dans la fabrication de biscuits et comprenant 20% de blanc d'oeuf en poudre, du caséinate de sodium et de 25 à 55% de protéines.

US-A-4 120 986 décrit un substitut d'oeuf entier, utilisé pour la fabrication de biscuits et comprenant de 10% à 20% de blanc d'oeuf en poudre, de l'amidon, des farines de soja, de sésame ou de maïs.

FR-A-2 589 680 décrit l'addition de poudre de blanc d'oeuf dans une composition pour la préparation de biscuits. Cette composition comprend en outre un pourcentage de protéines compris entre 15 et 50%.

On recherchait donc toujours un procédé et des produits permettant d'économiser une relative grande partie des oeufs mis en oeuvre dans la préparation de produits de pâtisserie-viennoiserie, tout en conservant les qualités gustatives du produit final, ainsi qu'un bon développement de celui-ci.

On recherchait aussi un procédé et des produits améliorant l'aspect du produit final.

La présente invention se fonde sur la possibilité de remplacer les pâtisseries aux oeufs par adjonction de blanc d'oeuf en poudre ou de substitut de blanc d'oeuf. Cette amélioration a pour conséquence de pouvoir diminuer le taux d'oeuf dans la pâtisserie-viennoiserie.

C'est pourquoi la présente invention a pour objet un procédé de préparation d'un article de pâtisserie-viennoiserie dont la préparation de base nécessite la présence d'oeufs entiers, dans lequel on remplace une partie de la quantité d'oeufs entiers de la préparation de base nécessaire à obtenir une qualité donnée de l'article de pâtisserie-viennoiserie, par une composition, apte à diminuer le taux d'oeuf dans ledit article, constituée de blanc d'oeuf en poudre ou d'un de ses équivalents bien connus dans le domaine agro-alimentaire choisi parmi la lactalbumine, le gluten de blé fractionné pour être enrichi en albumine et la carboxyméthylcellulose.

L'article de pâtisserie-viennoiserie peut être par exemple constitué de biscuits à la cuiller, de langues de chat, de boudoirs pour champagne, de biscuits de Reims, de madeleines, de cakes, de génoises, de biscuits roulés, de feuilles de génoise, de biscuits de Savoie, de pâtes à choux, de brioches, de pains d'épices, de barres (copies de quatre quarts), de pannetons, de Kouglofs, de blinis, de quenelles et de manière générale tout autre biscuit à base de pâte jaune, ainsi que les pâtés tels que les pâtés en croûte.

La préparation des articles ci-dessus nécessite la présence d'oeufs entiers, c'est à dire du jaune et du blanc de l'oeuf.

Selon l'invention la composition comprenant du blanc d'oeuf en poudre pulvérisé est d'autant plus efficace que la granulométrie est plus fine.

Selon l'invention, par "préparation de base", l'on entend les constituants de base de la recette, par exemple oeufs, sucre, eau, farine, levure et sel pour une génoise.
Les équivalents du blanc d'oeuf bien connus dans le domaine agro-alimentaire sont par exemple les lactalbumines (produits obtenus à partir de protéines du lait: caséine-présure traitées ou albumine de sérum précipitée), le gluten de blé fractionné pour être enrichi en albumine, et la carboxyméthylcellulose ; de manière générale, les substituts du blanc d'oeuf se présentent sous forme de poudres claires, solubles dans l'eau, s'émulsionnant bien en neige par battage et capables de coaguler à la chaleur, comme les blancs d'oeufs qu'ils peuvent en conséquence remplacer du point de vue mécanique et fonctionnel.

Ces propriétés moussantes importantes sont utiles pour caractériser les substituts du blanc d'oeuf qui se distinguent des substituts de l'oeuf entier aux propriétés moussantes bien moindres.

De tels substituts sont par exemple commercialisés par les sociétés INGREDIA, ARMOR PROTEINES, EPI BRETAGNE et CHAMTOR.

Dans la présente invention et dans ce qui suit, on parlera de blanc d'oeuf en poudre pulvérisé pour désigner celui-ci ou l'un de ses équivalents ci-dessus.

Dans la composition comprenant du blanc d'oeuf en poudre pulvérisé, ce dernier est avantageusement pulvérisé à une granulométrie inférieure à 63 µm pour 60 % au moins des particules, et de préférence à une granulométrie inférieure à 40 µm. Avantageusement les valeurs de granulométrie ci-dessus concernent 80 %, particulièrement 90 % et tout particulièrement au moins 95 % des particules.

La composition comprenant du blanc d'oeuf en poudre pulvérisé peut être constituée à plus de 80 %, voire en totalité de blanc d'oeuf en poudre. Une telle composition est de préférence utilisée pour améliorer l'aspect du produit final.

Dans des conditions préférentielles de mise en oeuvre du procédé, la composition comprenant du blanc d'oeuf en poudre pulvérisé comprend pondéralement de 5 à 20 % de blanc d'oeuf en poudre, de préférence 7 à 15 % et tout particulièrement 10 à 12 %.

Dans d'autres conditions préférentielles de mise en oeuvre de l'invention, la composition comprenant du blanc d'oeuf en poudre pulvérisé comprend pondéralement de 15 à 50 % de protéines, de préférence 30 à 40 % lorsque celles-ci proviennent du soja et, 15 à 20 % lorsque celles-ci proviennent de pois et de riz.

Ces protéines peuvent être par exemple apportées par de la farine de soja, de la farine de pois, de la farine de riz ou un mélange de tels produits, notamment un mélange de farine de pois et de farine de riz, ces dernières farines renfermant environ 30 à 40 % de protéines et la presque totalité du reste étant constituée de glucides de type amidon.

Dans d'autres conditions préférentielles de mise en oeuvre de l'invention, la composition ci-dessus renferme en outre pondéralement de 30 à 50 % de glucides de type amidon, de préférence de 35 à 45 %.

Indépendamment du fait que ces glucides peuvent être apportés par exemple par la farine de pois, de riz ou de soja, ils peuvent être apportés par exemple en outre par de l'amidon de maïs, de froment ou de la fécule de pomme de terre.

Dans encore d'autres conditions préférentielles de mise en oeuvre de l'invention, la composition ci-dessus renferme en outre du lactosérum ou un caséinate.

Ces derniers produits peuvent par exemple représenter pondéralement de 15 à 25 % en poids de la matière sèche.

Dans encore d'autres conditions préférentielles de mise en oeuvre de l'invention, tous les composés ci-dessus entrant dans la composition comprenant du blanc d'oeuf en poudre pulvérisé selon l'invention sont réduits à la même granulométrie.

La présente invention a également pour objet une composition alimentaire en poudre pour le remplacement d'oeufs entiers caractérisée en ce qu'elle comprend pondéralement :
- de 8 à 20 % de poudre de blanc d'oeuf,
- de 20 à 40 % de protéines sous forme de poudres,
- des glucides.

Dans des conditions préférentielles de mise en oeuvre de l'invention, le reste de la composition en poudre selon l'invention comprend essentiellement des glucides en poudre de type amidon.

Dans d'autres conditions préférentielles de mise en oeuvre de l'invention, la composition en poudre selon l'invention comprend en outre de 15 à 25 % de lactosérum et de caséinate sous forme de poudre.

Dans encore d'autres conditions préférentielles de mise en oeuvre de l'invention, la composition ci-dessus comprend pondéralement de 30 à 50 % de glucides de type amidon, de préférence de 35 à 45 %.

Des compositions en poudre particulièrement préférées selon l'invention comprennent :

| | |
|---|---|
| Farine de pois | 30 à 40 % |
| Farine de riz | 22 à 30 % |
| Blanc d'oeuf | 10 à 14 % |
| Lactosérum | 8 à 12 % |
| Caséinate | 8 à 10 % |
| Amidon de maïs | 7 à 9 % |

Dans toujours d'autres conditions préférentielles de mise en oeuvre de l'invention, au moins 60 % des poudres ci-dessus sont réduites à la même granulométrie, avantageusement inférieure à 63 µm, de préférence inférieure à 40 µm, et notamment 80 %, particulièrement 90 % et tout particulièrement au moins 95 % des particules des particules sont concernées par ces granulométries.

La présente invention a encore pour objet l'utilisation d'une composition en poudre renfermant de 8 à 20 % de poudre de blanc d'oeuf répondant avantageusement aux granulométries spécifiées ci-dessus, pour remplacer une partie des oeufs entiers (jaune et blanc) nécessaires à la préparation d'un article de pâtisserie-viennoiserie, et/ou en améliorer l'aspect.

Les procédés et compositions selon l'invention ont de remarquables propriétés.

Ils permettent en effet une économie substantielle puisque l'on peut remplacer environ 20 % des oeufs entiers tout en améliorant la qualité du produit final. En effet, le produit de substitut à base de blanc d'oeuf additionné d'eau est beaucoup moins cher que les oeufs entiers.

De plus, la préparation et les qualités du produit fini, à savoir la montée au battage et la montée au four sont très nettement supérieures à celles obtenues avec de l'oeuf uniquement. Cette amélioration des qualités peut se mesurer par un meilleur développement des produits et leur plus grande homogénéité.

L'invention apporte également un avantage important en ce qui concerne le stockage puisqu'une composition en poudre selon l'invention est cinq fois plus légère que la quantité d'oeufs correspondante et il n'est nul besoin de la stocker en chambre froide. Sa mise en oeuvre est très facile puisqu'il suffit d'ajouter de l'eau du robinet.

En outre, l'utilisation des compositions selon l'invention réduit d'autant les risques de contamination bactérienne, par exemple les salmonelloses, susceptibles d'être véhiculées par des oeufs entiers.

C'est pourquoi la présente invention trouve de remarquables applications dans la pâtisserie-viennoiserie, la briocherie et la panification nécessitant l'utilisation d'oeufs entiers et de manière générale dans les pâtes montées aux oeufs entiers.

Les exemples qui suivent illustrent la présente invention. Pour chacun d'eux, la granulométrie de chaque composant était inférieure à 63 µm pour 80 % des particules.

### Exemple 1 :

On a préparé, en plaçant ensemble dans un broyeur les différents ingrédients jusqu'à obtenir la granulométrie désirée, une composition en poudre pour substituer les oeufs entiers ayant la composition suivante :

| | |
|---|---|
| Farine de pois en poudre | 35,5 % |
| Farine de riz en poudre | 25,5 % |
| Blanc d'oeuf en poudre | 12 % |
| Lactosérum en poudre | 10 % |
| Caséinate en poudre | 9 % |
| Amidon de maïs en poudre | 8 % |

### Exemple 2:

De même, on a préparé une composition en poudre pour substituer les oeufs entiers ayant la composition suivante :

| | |
|---|---|
| Farine de soja en poudre | 60 % |
| Blanc d'oeuf en poudre | 7 % |
| Lactosérum en poudre | 10 % |
| Caséinate en poudre | 7 % |
| Amidon de maïs en poudre | 16 % |

### Exemple 3 :

De même, on a préparé une composition en poudre pour substituer les oeufs entiers ayant la composition suivante:

| | |
|---|---|
| Farine de soja en poudre | 50 % |
| Farine de riz en poudre | 10 % |
| Blanc d'oeuf en poudre | 10 % |
| Lactosérum en poudre | 10 % |
| Caséinate en poudre | 8 % |
| Amidon de maïs en poudre | 12 % |

### Exemples d'application

Pour chacun d'eux, la granulométrie de chaque composant solide était inférieure à 63 µm pour 80 % des particules.

### Exemple d'application N°1 : brioches

On a préparé des brioches comme suit:

On mélange une préparation de base conventionnelle constituée de:

| | |
|---|---|
| Farine | 10 Kg |
| Oeufs | 4 Kg |
| Beurre | 2 Kg |
| Sucre en poudre | 0,5 Kg |
| Levure | 0,3 Kg |
| Sel | 0,2 Kg |
| Emulsifiants (mono et diglycérides et lécithine) | 0,2 Kg |
| Lait liquide | 1,2 Kg |

avec 200 g du produit de l'exemple 1. L'ensemble est mis dans des moules et placé à l'étuve à 37°C pendant 45 mn environ.

On a aussi préparé des brioches témoins comme ci-dessus, mais sans produit de l'exemple 1 et en utilisant conventionnellement 5 kg d'oeufs au lieu de 4 kg et seulement 0,4 Kg de lait liquide.

On a également préparé des brioches témoins comme ci-dessus, avec du produit de l'exemple 1 mais sans blanc d'oeuf en poudre.

Les résultats obtenus sont les suivants:
1) Produit témoin : On obtient un produit habituel de bonne qualité.
2) Produit ci-dessus : Le produit est tellement plus développé qu'il nécessite de changer les moules pour en avoir des plus grands afin de ne pas déborder.
3) Produit ci-dessus mais sans blanc d'oeuf : le produit se développe légèrement moins que le produit habituel.

### Exemple d'application N°2 : génoises

On mélange une préparation de base conventionnelle constituée de :

| | |
|---|---|
| Oeufs | 3,7 Kg |
| Sucre | 6 Kg |
| Eau | 2 Kg |
| Sel | 1 cuillère à dessert |

avec 500 g du produit de l'exemple 1. Le tout est battu au fouet pour faire monter. Puis on ajoute 7 Kg de farine tamisée et 100 g de levure chimique. L'ensemble est mis dans des moules.

On a aussi préparé des génoises témoins comme ci-dessus, mais sans produit de l'exemple 1 et en utilisant conventionnellement 2,5 kg d'oeufs en plus et pas d'eau.

On a également préparé des génoises témoins comme ci-dessus, avec du produit de l'exemple 1 mais sans blanc d'oeuf en poudre.

Les résultats obtenus sont les suivants :
1) Produits témoins: Le produit est bon et tel qu'il doit être régulièrement.
2) Produits ci-dessus : Les génoises finales sont légèrement plus développées.
3) Produits ci-dessus, mais sans blanc d'oeuf : Les génoises finales se développent de façon comparable aux produits témoins.

## Revendications

1. Procédé de préparation d'un article de pâtisserie-viennoiserie dont la préparation de base nécessite la présence d'oeufs entiers, **caractérisé en ce que** l'on remplace une partie de la quantité d'oeufs entiers de la préparation de base nécessaire à obtenir une qualité donnée de l'article de pâtisserie-viennoiserie, par une composition, apte à diminuer le taux d'oeuf dans ledit article, constituée de blanc d'oeuf en poudre, de lactalbumine, de gluten de blé fractionné pour être enrichi en albumine ou de carboxyméthylcellulose.

2. Procédé selon la revendication 1, **caractérisé en ce que** ladite composition est constituée de blanc d'oeuf en poudre.

3. Procédé selon la revendication 1, **caractérisé en ce que** ladite composition est constituée de lactalbumine.

4. Procédé selon l'une quelconque des revendication 1 à 3, **caractérisée en ce que** ladite composition renferme, en outre, du lactosérum ou un caséinate.

5. Procédé selon l'une quelconque des revendication 1 à 4, **caractérisé en ce que** ladite composition est pulvérisée à une granulométrie inférieure à 63 µm pour 60 % au moins des particules.

6. Procédé de préparation d'un article de pâtisserie-viennoiserie dont la préparation de base nécessite la présence d'oeufs entiers, **caractérisé en ce que** l'on remplace une partie de la quantité d'oeufs entiers de la préparation de base nécessaire à obtenir une qualité donnée de l'article de pâtisserie-viennoiserie, par une composition comprenant un composé, apte à diminuer le taux d'oeuf dans ledit article, choisi parmi le blanc d'oeuf en poudre, une lactalbumine, le gluten de blé fractionné pour être enrichi en albumine ou la carboxyméthylcellulose, ledit composé étant pulvérisé à une granulométrie inférieure à 63 µm pour 60 % au moins des particules.

7. Procédé selon l'une des revendications 5 ou 6, **caractérisé en ce que** ledit composé est pulvérisé à une granulométrie inférieure à 63 µm pour 80 % au moins des particules.

8. Procédé selon l'une des revendications 6 ou 7, **caractérisé en ce que** ladite composition contient pondéralement de 5 à 20 % de blanc d'oeuf en poudre.

9. Procédé selon l'une des revendications 6 à 8, **caractérisé en ce que** ladite composition contient pondéralement de 15 à 50 % de protéines.

10. Procédé selon l'une quelconque des revendications 6 à 9, **caractérisé en ce que** ladite composition contient en outre pondéralement de 30 à 50 % de glucides de type amidon.

11. Procédé selon l'une des revendications 6 à 10, **caractérisé en ce que** ladite composition contient en outre du lactosérum ou un caséinate.

12. Procédé selon l'une des revendications 1 à 11, **caractérisé en ce que** ladite composition contient du blanc d'oeuf en poudre, du lactosérum et un caséinate.

13. Procédé selon l'une des revendications 1 à 11, **caractérisé en ce que** ladite composition contient une lactalbumine, du lactosérum et un caséinate

14. Procédé selon l'une des revendications 11 à 13, **caractérisé en ce que** ladite composition contient de 15 à 25% de lactosérum et un caséinate sous forme de poudre.

15. Une composition alimentaire en poudre pour le remplacement d'oeufs entiers , **caractérisée en ce qu'**elle comprend du blanc d'oeuf en poudre, une lactalbumine, du gluten de blé fractionné pour être enrichi en albumine ou de la carboxyméthylcellulose, dans laquelle tous les composés entrant dans la composition sont pulvérisés à la même granulométrie.

16. Une composition alimentaire en poudre selon la revendication 15, **caractérisée en ce que** le blanc d'oeuf en poudre, la lactalbumine, le gluten de blé fractionné pour être enrichi en albumine ou la carboxyméthylcellulose est pulvérisé(e) à une granulométrie inférieure à 63 µm pour 60 % au moins des particules.

17. Une composition alimentaire en poudre selon l'une des revendication 15 ou 16, **caractérisée en ce qu'**elle renferme en outre du lactosérum ou un caséinate.

18. Une composition alimentaire en poudre selon l'une des revendications 15 à 17, **caractérisée en ce qu'**elle comprend pondéralement :
- de 8 à 20 % de blanc d'oeuf en poudre,
- de 20 à 40 % de protéines,
- des glucides.

19. Une composition alimentaire en poudre selon l'une quelconque des revendications 15 à 17 comprenant :
| | |
|---|---|
| Farine de pois | 30 à 40 % |
| Farine de riz | 22 à 30 % |
| Blanc d'oeuf | 10 à 14 % |
| Lactosérum | 8 à 12 % |
| Caséinate | 8 à 10 % |
| Amidon de maïs | 7 à 9 % |

20. Une composition alimentaire en poudre selon l'une quelconque des revendications 15 à 19, **caractérisée en ce que** au moins 60 % des différents constituants sont pulvérisés à une granulométrie sensiblement identique.

21. Utilisation d'une composition alimentaire en poudre telle que définie à l'une quelconque des revendications 15 à 20 pour remplacer une partie des oeufs entiers (jaune et blanc) nécessaires à la préparation d'un article de pâtisserie-viennoiserie.

22. Une composition alimentaire en poudre pour le remplacement d'oeufs entiers contenant du blanc d'oeuf en poudre, du lactosérum et un caséinate.

23. Une composition alimentaire en poudre selon la revendication 22, **caractérisée en ce que** les différents constituants sont pulvérisés à une granulométrie inférieure à 63 µm pour 60 % au moins des particules.

24. Une composition alimentaire en poudre selon l'une des revendications 22 ou 23, **caractérisée en ce que** les différents constituants sont pulvérisés à une granulométrie inférieure à 63 µm pour 80 % au moins des particules.

25. Utilisation d'une composition alimentaire en poudre telle que définie à l'une quelconque des revendications 22 à 24 pour remplacer une partie des oeufs entiers (jaune et blanc) nécessaires à la préparation d'un article de pâtisserie-viennoiserie.

## Claims

1. Method for preparing a pastry - Viennese bakery product, the base preparation of which requires the inclusion of whole eggs, **characterised in that** part of the quantity of whole eggs of the base preparation required for obtaining a specific quality of the pastry - Viennese bakery product is replaced with a composition which can reduce the level of egg in said bakery product, which is constituted by egg white powder, lactalbumin, wheat gluten fractionated in order to be enriched with albumin or carboxymethyl cellulose.

2. Method according to claim 1, **characterised in that** said composition is constituted by egg white powder.

3. Method according to claim 1, **characterised in that** said composition is constituted by lactalbumin.

4. Method according to any one of claims 1 to 3, **characterised in that** said composition also contains lactoserum or a caseinate.

5. Method according to any one of claims 1 to 4, **characterised in that** said composition is pulverized to a granulometry lower than 63 µm for at least 60% of the particles.

6. Method for preparing a pastry - Viennese bakery product, the base preparation of which requires the inclusion of whole eggs, **characterised in that** part of the quantity of whole eggs of the base preparation required for obtaining a specific quality of the pastry - Viennese bakery product is replaced with a composition comprising a compound which can reduce the level of egg in said product, chosen from egg white powder, lactalbumin, wheat gluten fractionated in order to be enriched with albumin or carboxymethyl cellulose, said compound being pulverized to a granulometry lower than 63 µm for at least 60% of the particles.

7. Method according to one of claims 5 or 6, **characterized in that** said compound is pulverized to a granulometry lower than 63 µm for at least 80% of the particles.

8. Method according to one of claims 6 or 7, **characterized in that** said composition contains from 5 to 20% by weight of egg white powder.

9. Method according to one of claims 6 to 8, **characterized in that** said composition contains from 15 to 50% by weight of proteins.

10. Method according to one of claims 6 to 9, **characterized in that** said composition also contains from 30 to 50% by weight of starch-type glucides.

11. Method according to one of claims 6 to 10, **characterized in that** said composition also contains lactoserum or a caseinate.

12. Method according to one of claims 1 to 11, **characterized in that** said composition contains egg white powder, lactoserum or a caseinate.

13. Method according to one of claims 1 to 11, **characterized in that** said composition contains a lactalbumin, lactoserum and a caseinate.

14. Method according to one of claims 11 to 13, **characterized in that** said composition contains from 15 to 25% lactoserum and a caseinate in the form of powder.

15. A food composition in powder form for the replacement of whole eggs, **characterised in that** it comprises egg white powder, a lactalbumin, wheat gluten fractionated in order to be enriched with albumin or carboxymethyl cellulose, in which all the compounds included in the composition are pulverized to the same granulometry.

16. A food composition in powder form according to claim 15, **characterized in that** the egg white powder, the lactalbumin, the wheat gluten fractionated in order to be enriched with albumin or the carboxymethyl cellulose is pulverized to a granulometry lower than 63 µm for at least 60% of the particles.

17. A food composition in powder form according to one of claims 15 or 16, **characterized in that** it also contains lactoserum or a caseinate.

18. A food composition in powder form according to one of claims 15 to 17, **characterized in that** it comprises by weight:
- from 8 to 20% egg white powder
- from 20 to 40% proteins
- glucides.

19. A food composition in powder form according to any one of claims 15 to 17 comprising:
| | |
|---|---|
| Pea flour | 30 to 40% |
| Rice flour | 22 to 30% |
| Egg white | 10 to 14% |
| Lactoserum | 8 to 12% |
| Caseinate | 8 to 10% |
| Corn starch | 7 to 9% |

20. A food composition in powder form according to any one of claims 15 to 19, **characterised in that** at least 60% of the different ingredients are pulverized to an essentially identical granulometry.

21. Use of a food composition in powder form as defined in any one of claims 15 to 20 for replacing part of the whole eggs (yolk and white) necessary for the preparation of a pastry - Viennese bakery product.

22. A food composition in powder form for the replacement of whole eggs, containing egg white powder, lactoserum and a caseinate.

23. A food composition in powder form according to claim 22, **characterized in that** the different constituents are pulverized to a granulometry lower than 63 µm for at least 60% of the particles.

24. A food composition in powder form according to one of claims 22 or 23, **characterized in that** the different constituents are pulverized to a granulometry lower than 63 µm for at least 80% of the particles.

25. Use of a food composition in powder form as defined in any one of claims 22 to 24 for replacing part of the whole eggs (yolk and white) necessary for the preparation of a pastry - Viennese bakery product.

## Patentansprüche

1. Verfahren zur Herstellung eines Produktes aus den Bereichen Pätisserie/Viennoiserie, dessen Grundzubereitung das Vorliegen von ganzen Eiern bzw. Volleiern erfordert, **dadurch gekennzeichnet, dass** ein Teil der Menge an ganzen Eiern bzw. Volleiern der Grundzubereitung, die notwendig ist, um eine gegebene Qualität des Produktes aus dem Bereich Pâtisserie/Viennoiserie zu erhalten, durch eine Zusammensetzung ersetzt wird, die zur Verringerung des Eigehalts in dem Produkt geeignet ist und die aus pulverförmigem Eiweiß, Lactalbumin, Weizengluten, das zum Zwecke der Anreicherung mit Albumin fraktioniert wurde, oder Carboxymethylcellulose besteht.

2. Verfahren nach Anspruch 1, **dadurch gekennzeichnet, dass** die Zusammensetzung aus pulverförmigem Eiweiß besteht.

3. Verfahren nach Anspruch 1, **dadurch gekennzeichnet, dass** die Zusammensetzung aus Lactalbumin besteht.

4. Verfahren nach einem der Ansprüche 1 bis 3, **dadurch gekennzeichnet, dass** die Zusammensetzung zusätzlich Molke oder ein Caseinat enthält.

5. Verfahren nach einem der Ansprüche 1 bis 4, **dadurch gekennzeichnet, dass** die Zusammensetzung zu einer Granulometrie von unter 63 µm für wenigstens 60% der Partikel pulverisiert ist.

6. Verfahren zur Herstellung eines Produktes aus den Bereichen Pätisserie/Viennoiserie, dessen Grundzubereitung das Vorliegen von ganzen Eiern bzw. Volleiern erfordert, **dadurch gekennzeichnet, dass** ein Teil der Menge an ganzen Eiern bzw. Volleiern der Grundzubereitung, die notwendig ist, um eine gegebene Qualität des Produktes aus den Bereichen Pätisserie/Viennoiserie zu erhalten, durch eine Zusammensetzung ersetzt wird, die eine Verbindung enthält, die zur Verringerung des Eigehalts in dem Produkt geeignet ist, die unter Eiweiß in Pulverform, einem Lactalbumin, Weizengluten, das zum Zwecke der Anreicherung mit Albumin fraktioniert wurde, oder Carboxymethylcellulose ausgewählt wird, wobei die Verbindung zu einer Granulometrie von unter 63 µm für wenigstens 60% der Partikel pulverisiert wird.

7. Verfahren nach einem der Ansprüche 5 oder 6, **dadurch gekennzeichnet, dass** die Verbindung zu einer Granulometrie von unter 63 µm für wenigstens 80% der Partikel pulverisiert wird.

8. Verfahren nach einem der Ansprüche 6 oder 7, **dadurch gekennzeichnet, dass** die Zusammensetzung 5 bis 20%, bezogen auf das Gewicht, pulverförmiges Eiweiß enthält.

9. Verfahren nach einem der Ansprüche 6 bis 8, **dadurch gekennzeichnet, dass** die Zusammensetzung 15 bis 50%, bezogen auf das Gewicht, Proteine enthält.

10. Verfahren nach einem der Ansprüche 6 bis 9, **dadurch gekennzeichnet, dass** die Zusammensetzung außerdem 30 bis 50%, bezogen auf das Gewicht, Kohlehydrate des Stärketyps enthält.

11. Verfahren nach einem der Ansprüche 6 bis 10, **dadurch gekennzeichnet, dass** die Zusammensetzung außerdem Molke oder ein Caseinat enthält.

12. Verfahren nach einem der Ansprüche 1 bis 11, **dadurch gekennzeichnet, dass** die Zusammensetzung pulverförmiges Eiweiß, Molke und ein Caseinat enthält.

13. Verfahren nach einem der Ansprüche 1 bis 11, **dadurch gekennzeichnet, dass** die Zusammensetzung ein Lactalbumin, Molke und ein Caseinat enthält.

14. Verfahren nach einem der Ansprüche 11 bis 13, **dadurch gekennzeichnet, dass** die Zusammensetzung 15 bis 25% Molke und ein Caseinat in Pulverform enthält.

15. Pulverförmige Lebensmittelzusammensetzung zum Ersetzen von ganzen Eiern, **dadurch gekennzeichnet, dass** sie pulverförmiges Eiweiß, Lactalbumin, Weizengluten, das zum Zwecke der Anreicherung mit Albumin fraktioniert wurde, oder Carboxymethylcellulose enthält, wobei alle Verbindungen, die in die Zusammensetzung eintreten, zu derselben Granulometrie pulverisiert sind.

16. Pulverförmige Lebensmittelzusammensetzung nach Anspruch 15, **dadurch gekennzeichnet, dass** das pulverförmige Eiweiß, das Lactalbumin, das Weizengluten, das zum Zwecke der Anreicherung mit Albumin fraktioniert wurde, oder die Carboxymethylcellulose zu einer Granulometrie von unter 63 µm für wenigstens 60% der Partikel pulverisiert ist.

17. Pulverförmige Lebensmittelzusammensetzung nach einem der Ansprüche 15 oder 16, **dadurch gekennzeichnet, dass** sie außerdem Molke oder ein Caseinat enthält.

18. Pulverförmige Lebensmittelzusammensetzung nach einem der Ansprüche 15 bis 17, **dadurch gekennzeichnet, dass** sie, bezogen auf das Gewicht, enthält:
- 8 bis 20% pulverförmiges Eiweiß,
- 20 bis 40% Proteine,
- Kohlenhydrate.

19. Pulverförmige Lebensmittelzusammensetzung nach einem der Ansprüche 15 bis 17, umfassend:
| | |
|---|---|
| Erbsenmehl | 30 bis 40% |
| Reismehl | 22 bis 30% |
| Eiweiß | 10 bis 14% |
| Molke | 8 bis 12% |
| Caseinat | 8 bis 10% |
| Maisstärke | 7 bis 9%. |

20. Pulverförmige Lebensmittelzusammensetzung nach einem der Ansprüche 15 bis 19, **dadurch gekennzeichnet, dass** wenigstens 60% der verschiedenen Bestandteile zu einer deutlich identischen Granulometrie pulverisiert sind.

21. Verwendung einer pulverförmigen Lebensmittelzusammensetzung, wie sie in einem der Ansprüche 15 bis 20 definiert ist, um einen Teil der ganzen Eier bzw. Volleier (gelb und weiß) zu ersetzen, die für die Herstellung eines Produkts aus dem Bereich der Pâtisserie/Viennoiserie notwendig sind.

22. Pulverförmige Lebensmittelzusammensetzung, um ganze Eier zu ersetzen, die pulverförmiges Eiweiß, Molke und ein Caseinat enthält.

23. Pulverförmige Lebensmittelzusammensetzung nach Anspruch 22, **dadurch gekennzeichnet, dass** die verschiedenen Bestandteile zu einer Granulometrie von unter 63 µm für wenigstens 60% der Partikel pulverisiert sind.

24. Pulverförmige Lebensmittelzusammensetzung nach einem der Ansprüche 22 oder 23, **dadurch gekennzeichnet, dass** die verschiedenen Bestandteile für wenigstens 80% der Partikel zu einer Granulometrie von unter 63 µm pulverisiert sind.

25. Verwendung einer pulverförmigen Lebensmittelzusammensetzung, wie sie in einem der Ansprüche 22 bis 24 definiert ist, um einen Teil der ganzen Eier (gelb und weiß), die für die Herstellung eines Produktes aus dem Bereich der Pâtisserie/Viennoiserie notwendig sind, zu ersetzen.
